# FASCICULE DE BREVET EUROPEEN

(11) **EP 2 522 183 B1**
(45) Date de publication et mention de la délivrance du brevet: **15.05.2013**
(21) Numéro de dépôt: 10810792.1
(22) Date de dépôt: 29.12.2010
(51) Int. Cl.: H04W 48/18

(54) **GESTION D'UNE INTERFACE DE COMMUNICATIONS SANS FIL D'UN TERMINAL**
SCHNITTSTELLENVERWALTUNG IN EINEM DRAHTLOSEN KOMMUNIKATIONSSYSTEM
WIRELESS TERMINAL INTERFACE MANAGEMENT

(30) Priorité: 04.01.2010 FR 1050013
(43) Date de publication de la demande: 14.11.2012
(73) Titulaire: France Télécom, 75015 Paris (FR)
(72) Inventeur: BOURNELLE, Julien, F-75012 Paris (FR); MORAND, Lionel, F-92240 Malakoff (FR)
(74) Mandataire: Delumeau, François Guy
(86) Numéro de dépôt international: PCT/FR2010/052935
(87) Numéro de publication internationale: WO 2011/080491

(56) Documents cités:
- WO-A1-01/97543
- US-A1- 2006 193 295

## Description

### Arrière-plan de Invention

La présente invention se rapporte au domaine général des télécommunications.

Elle concerne plus particulièrement l'activation d'une interface de communications sans fil sur un terminal, telle que par exemple une interface de type Bluetooth™, WiF™ (Wireless Fidelity). Un example se trouve dans WO 01/97543.

Par activation (respectivement désactivation) d'une interface de communications sans fil, on entend ici allumage ou démarrage (respectivement extinction) de l'interface. Autrement dit, au sens de l'invention, une interface de communications sans fil n'émet aucun signal (pas même un signal de présence), tant qu'elle n'est pas activée.

De façon générale, les interfaces de communications sans fil de type Bluetooth™ ou WLAN permettent à un terminal de se connecter à un réseau domestique ou à un réseau de communications privé ou public, par l'intermédiaire d'un point d'accès. Cette connexion n'est rendue possible que lorsque l'interface de communications est activée.

Actuellement, l'activation et la désactivation d'une interface de communications sans fil sont réalisées manuellement par l'utilisateur du terminal : l'utilisateur sélectionne, via un menu dédié de son terminal l'interface qu'il souhaite activer ou désactiver, puis indique quelle action il souhaite accomplir (i.e. activation ou désactivation).

Pour éviter des activations et des désactivations répétées, l'utilisateur a la possibilité de laisser activées en permanence les interfaces de communications sans fil de son terminal.

Toutefois, cette solution est consommatrice en énergie et a ainsi un impact non négligeable sur l'autonomie de la batterie du terminal.

### Objet et résumé de l'invention

La présente invention permet de pallier notamment cet inconvénient en proposant un procédé de gestion d'au moins une interface de communications sans fil d'un terminal, comprenant :
- une étape d'obtention d'une information représentative d'une localisation géographique du terminal ;
- une étape de recherche, dans une base de données du terminal, d'au moins un identifiant d'une l'interface de communications sans fil du terminal associé à cette information ; et
- le cas échéant, une étape d'activation automatique de l'interface de communications sans fil correspondant audit au moins un identifiant.

Corrélativement, l'invention vise également un terminal équipé d'au moins une l'interface de communications sans fil, comprenant :
- des moyens d'obtention d'une information représentative d'une localisation géographique du terminal ;
- des moyens de recherche, dans une base de données du terminal, d'au moins un identifiant d'une l'interface de communications sans fil du terminal associé à cette information ;
- des moyens d'activation automatique, le cas échéant, de l'interface de communications sans fil correspondant audit au moins un identifiant.

L'invention part du constat qu'un utilisateur active souvent les interfaces de communications sans fil de son terminal dans les mêmes endroits (par exemple son interface WLAN à son domicile ou sur son lieu de travail, ou encore dans une gare ou un aéroport souvent fréquenté, etc.). Elle propose avantageusement de stocker, dans une base de données du terminal, la correspondance entre une localisation géographique du terminal et une ou plusieurs interfaces de communications sans fil à activer.

L'invention permet ainsi d'activer automatiquement les interfaces appropriées en fonction de la localisation géographique du terminal. Elle dispense de ce fait l'utilisateur de devoir lui-même activer manuellement ces interfaces via un menu dédié. L'activation de ces interfaces se fait donc de manière transparente pour l'utilisateur du terminal.

L'invention permet non seulement de minimiser les procédures manuelles d'activation des interfaces de communications sans fil d'un terminal, mais elle offre également une économie substantielle en termes de batterie, puisqu'il n'est plus utile d'avoir les interfaces de communications activées en permanence.

Dans une première variante de réalisation de l'invention, l'étape d'obtention comprend la réception d'un message émis par un système GPS et contenant l'information représentative de la localisation géographique du terminal.

Cette information est par exemple constituée par les coordonnées géographiques du terminal.

Dans une seconde variante de réalisation de l'invention, l'étape d'obtention comprend la réception d'un message de signalisation émis par un réseau de télécommunications cellulaire auquel est connecté le terminal (par exemple un réseau GSM (Global System for Mobile communications) ou UMTS (Universal Mobile Telecommunications system)), ce message contenant l'information représentative de la localisation géographique du terminal.

Dans cette seconde variante, cette information est par exemple un identifiant d'une cellule du réseau de télécommunications cellulaire (i.e. la cellule dans laquelle se trouve le terminal ou à laquelle il est attaché).

Ainsi l'invention permet de s'appuyer sur des données classiquement reçues du réseau de télécommunications cellulaire par le terminal. Elle ne nécessite pas de mise en place de messages particuliers entre le terminal et le réseau cellulaire mais utilisée une information dont le terminal dispose habituellement lors d'une connexion au réseau cellulaire, à savoir l'identifiant de la cellule à laquelle il est attaché ou dans laquelle il se trouve.

L'information représentative de la localisation géographique du terminal peut également être constituée par les coordonnées géographiques du terminal, transmises dans un message provenant du réseau cellulaire.

Dans un mode particulier de réalisation, le procédé de gestion de l'invention comprend en outre :
- une étape de détection d'un changement de localisation géographique du terminal ; et
- une étape de désactivation automatique de la ou des interface(s) précédemment activées.

L'invention permet ainsi également de désactiver automatiquement les interfaces de communications sans fil du terminal en fonction de la localisation géographique du terminal, et plus précisément, lorsque celle-ci a changé. On préserve ainsi l'autonomie de la batterie du terminal.

Afin d'éviter une désactivation inappropriée de l'interface, l'étape de désactivation automatique pourra n'être mise en oeuvre qu'après l'expiration d'une durée prédéterminée, pendant laquelle on s'assurera que l'interface de communications n'est plus utilisée par le terminal.

L'invention vise également une base de données d'un terminal équipé d'au moins une interface de communications sans fil, comprenant au moins une information représentative d'une localisation géographique du terminal associée à au moins un identifiant d'une desdites interfaces de communications sans fil.

Dans un mode particulier de réalisation, les différentes étapes du procédé de gestion sont déterminées par des instructions de programmes d'ordinateurs.

En conséquence, l'invention vise aussi un programme d'ordinateur sur un support d'informations, ce programme étant susceptible d'être mis en oeuvre dans un terminal ou plus généralement dans un ordinateur, ce programme comportant des instructions adaptées à la mise en oeuvre des étapes d'un procédé de gestion tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé de gestion et le terminal selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un terminal conforme à l'invention, dans son environnement, dans un mode particulier de réalisation ;
- la figure 2 représente, sous forme d'organigramme, les principales étapes d'un procédé de gestion d'une interface de communications sans fil du terminal représenté sur la figure 1, dans un mode particulier de réalisation de l'invention ; et
- la figure 3 représente un exemple d'une base de données conforme à l'invention, dans un mode particulier de réalisation.

### Description détaillée d'un mode de réalisation

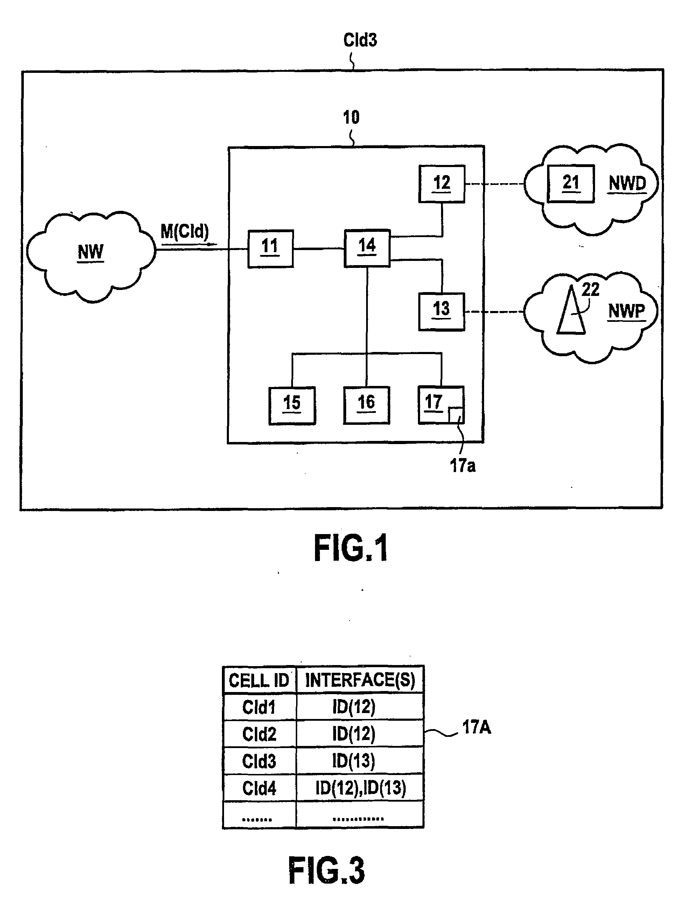

La figure 1 représente, dans son environnement, un terminal 10 conforme à l'invention, dans un mode particulier de réalisation.

Dans l'exemple envisagé ici, le terminal 10 est un téléphone mobile multi-mode. Cette hypothèse n'est toutefois pas limitative, l'invention pouvant s'appliquer à d'autres types de terminaux, comme par exemple à un ordinateur portable, un assistant personnel (PDA, Personal Digital Assistant), etc.

Le terminal 10 dispose de moyens de communications 11 lui permettant de se connecter à un réseau de télécommunications cellulaire NW. Ces moyens de communications 11 comprennent notamment une carte SIM (Subscriber Identity Module) et une interface radio conforme au réseau cellulaire NW.

Par réseau cellulaire, on entend ici un réseau de communications sans fil dans lequel les terminaux communiquent entre eux par le biais d'une infrastructure dédiée, au moyen de bornes (ou stations de base) disséminées sur le territoire couvert par le réseau, chaque borne couvrant une zone géographique prédéterminée appelée cellule.

Le réseau cellulaire NW est ici un réseau de télécommunications UMTS (Universal Mobile Telecommunications System). Cependant, invention s'applique également à d'autres réseaux cellulaires, tels que par exemple des réseaux de deuxième génération (GSM (Global System for Mobile communications), GPRS (General Packet Radio Service), EDGE (Enhanced Data rates for GSM Evolution), etc.), d'autres réseaux de troisième génération (HSDPA (High Speed Data Packet Access), CDMA (Code Division Multiple Access), etc.), des réseaux de quatrième génération de type LTE (Long Term Evolution), etc.

Le terminal 10 est muni en outre d'une interface de communications sans fil 12 courte portée de type Bluetooth™ et d'une interface de communications sans fil 13 moyenne portée de type WLAN.

L'interface 12 permet au terminal 10 d'établir une connexion sans fil avec un équipement 21 d'un réseau domestique NWD, lui-même muni d'une interface Bluetooth™. L'équipement 21 est par exemple un kit main libres, un autre terminal, etc. Une communication locale entre le terminal 10 et l'équipement 21 au sein du réseau domestique NWD peut alors s'établir.

De façon similaire, l'interface 13 permet au terminal 10 d'établir une connexion sans fil avec un point d'accès 22 à un réseau public NWP (par exemple le réseau Internet), conformément au protocole WLAN. En variante, le réseau NWP peut être un réseau privé ou un réseau domestique.

Dans l'exemple considéré ici, on envisage la gestion des interfaces de communications sans fil 12 et 13 du terminal 10. Bien entendu, d'autres interfaces de communications sans fil pourraient être envisagées, et l'invention peut aisément être appliquée à la gestion d'un nombre différent d'interfaces.

On notera que les interfaces de communications sans fil 12 et 13 et les moyens de communications 11 sur le réseau de télécommunications cellulaire NW sont indépendants les uns des autres. Notamment, ils peuvent être activés ou désactivés indépendamment les uns des autres.

Dans l'exemple envisagé ici, le terminal 10 a l'architecture matérielle d'un ordinateur. Il comporte un processeur 14, une mémoire vive de type RAM 15, une mémoire morte de type ROM 16 et une mémoire non volatile 17.

La mémoire morte 16 constitue un support d'enregistrement conforme à l'invention, lisible par le processeur 14 du terminal 10, et sur lequel est enregistré un programme d'ordinateur conforme à l'invention, comportant des instructions pour l'exécution des étapes d'un procédé de gestion des interfaces de communications 12 et 13 selon l'invention.

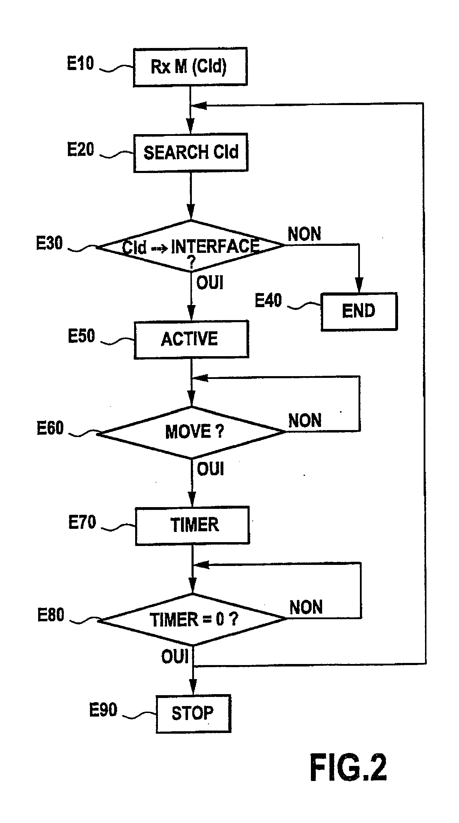

Les principales étapes de ce procédé sont représentées, dans un mode particulier de réalisation de l'invention, sur la figure 2 décrite maintenant.

On suppose ici que le terminal 10 est connecté au réseau de télécommunications cellulaire NW. Cette connexion est maintenue active afin que le terminal 10 puisse recevoir et/ou émettre des appels téléphoniques ou des messages via le réseau NW.

De façon connue, lorsqu'une telle connexion est établie, le réseau cellulaire, notamment par le biais des stations de base (ou Node B), diffuse des messages de signalisation au terminal 10 sur le canal BCCH (Broadcast Control CHannel). Ces messages sont destinés à permettre au terminal 10 d'établir une communication via le réseau NW.

Le terminal 10 sait déterminer, à partir de ces messages de signalisation, dans quelle cellule il se trouve ou tout du moins, à quelle cellule il est attaché.

Plus précisément, on suppose ici que le terminal 10 reçoit, par l'intermédiaire de ses moyens de communications 11, un message M émis par la station de base associée à la cellule dans laquelle il se trouve, sur le canal BCCH (Broadcast Control CHannel) du réseau NW (étape E10).

Conformément au standard UMTS, ce message comporte des blocs d'informations système ou SIB (System Information Block). Le bloc SIB1 contient notamment un identifiant CId de cette cellule (aussi connu sous le nom de CellID).

De plus amples détails sur les informations systèmes transmises sur le canal BCCH sont disponibles par exemple dans le document 3GPP TS25.331 intitulé « Radio Resource Control : Protocol Specification », Release 6.

L'identifiant de cellule CId constitue une information représentative d'une localisation géographique du terminal 10 au sens de l'invention, puisqu'elle permet de localiser, même « grossièrement », le terminal. En effet, de façon connue, chaque cellule est identifiée dans un réseau de façon unique et à chaque cellule correspond une zone géographique prédéfinie. Ainsi un identifiant de cellule permet de déterminer, à la cellule près, la localisation géographique du terminal.

Le processeur 14 du terminal 10 extrait l'identifiant de cellule CId du message M et le stocke dans la mémoire vive 15.

Puis il recherche cet identifiant dans une base de données 17A du terminal 10 (étape E20). Au sens de l'invention, une base de données désigne un ensemble ou une structure de données (ex. une table).

La base de données 17A est mémorisée dans la mémoire non volatile 17 du terminal. Elle associe à des identifiants de cellules couvertes par le réseau NW, l'identifiant d'une ou de plusieurs interfaces de communications sans fil du terminal 10 que l'utilisateur souhaite activer lorsqu'il se trouve dans ces cellules.

Un exemple d'une telle base est représenté sur la figure 3. Selon cet exemple :
- aux identifiants de cellule CId1 et CId2 du réseau NW est associé l'identifiant ID(12) de l'interface de communications 12 ;
- à l'identifiant de cellule CId3 du réseau NW est associé l'identifiant ID(13) de l'interface de communications 13 ;
- à l'identifiant de cellule CId4 du réseau NW sont associées les identifiants ID(12) et ID(13) des interfaces de communications 12 et 13;
- etc.

Cette base peut être prédéterminée et transmise au terminal, par exemple via l'une ou l'autre des interfaces de communications 12 ou 13.

En variante, elle peut être enrichie à chaque fois que l'utilisateur du terminal 10 active manuellement les interfaces de communications 12 et 13.

Par exemple, à chaque activation réalisée manuellement par l'utilisateur du terminal, celui-ci indique s'il désire ou non enregistrer, dans la base de données 17A, un identifiant de l'interface activée. Le cas échéant, si le terminal 10 se trouve sous couverture du réseau cellulaire NW, il récupère d'un des messages de signalisation émis par le réseau, l'identifiant de la cellule dans laquelle il se trouve, et associe, dans la base 17A, cet identifiant à l'identifiant de l'interface activée.

Comme le montre l'exemple représenté sur la figure 3, plusieurs interfaces de communications du mobile peuvent être associées à un même identifiant de cellule. De façon similaire, une interface de communications peut être associée à plusieurs identifiants de cellule.

L'étape E20 de recherche dans la base 17A vise donc à déterminer si l'identifiant CId se trouve dans la base, et le cas échéant, à déterminer à quelle(s) interface(s) de communications du terminal 10 il est associé (étape E30). Cette étape est mise en oeuvre par interrogation de la base de données 17A à l'aide de l'identifiant CId, selon des moyens conventionnels connus de l'homme du métier et non détaillés ici.

Si l'identifiant CId ne se trouve pas dans la base de données 17A, le procédé s'arrête (étape E40). Les interfaces de communications 12 et 13 ne sont pas activées automatiquement par le processeur 14, mais l'utilisateur reste libre de les activer manuellement s'il le désire.

On suppose ici que l'identifiant de cellule CId est égal à CId3. Ainsi, en référence à la figure 3, l'interrogation de la base de données 17A par le processeur 14 permet de déterminer que l'interface 13, identifiée par ID(13), est associée à la cellule dans laquelle se trouve le terminal 10.

Sur réception de l'identifiant ID(13), le processeur 14 active (autrement dit allume) automatiquement l'interface 13 (étape E50), grâce à une application logicielle appropriée, connue en soi et non détaillée ici.

L'activation de l'interface 13 est donc déclenchée automatiquement, i.e., sans requérir l'intervention de l'utilisateur du terminal 10.

L'interface 13 étant activée, une connexion au réseau public NWP est possible, dès lors que le terminal 10 se trouve à proximité suffisante du point d'accès 22 pour s'appairer et communiquer avec lui. On notera que les paramètres d'appairage au point d'accès 22 peuvent également être stockés dans la base 17A.

Dans le mode de réalisation décrit ici, suite à l'activation automatique de l'interface 13, le processeur 14 du terminal 10 continue d'analyser les identifiants de cellule reçus dans les messages de signalisation émis par le réseau cellulaire NW, et ce, en vue de détecter un changement de localisation géographique du terminal 10.

Plus particulièrement, de façon continue ou à divers instants prédéterminés (par exemple périodiquement), le processeur 14 extrait chaque identifiant de cellule (noté CId') reçu dans ces messages et le compare avec l'identifiant CId stocké dans la mémoire volatile 13 (étape E60).

Si l'identifiant CId' est distinct de l'identifiant CId, un changement de localisation géographique du terminal 10 est détecté. Autrement dit, l'interface 13 activée précédemment n'est peut être plus appropriée.

Sur détection de ce changement de localisation géographique, le processeur 14 arme un temporisateur pour une durée de temporisation Tₜₑₘₚₒ prédéterminée (étape E70).

Si pendant cette durée de temporisation Tₜₑₘₚₒ (étape E80), aucun message reçu par le terminal 10 du réseau cellulaire NW ne lui permet de déterminer qu'il se trouve de nouveau dans la cellule identifiée par CId, l'interface de communications 13 est automatiquement désactivée par le processeur 14 (étape E90), grâce à une application logicielle appropriée, connue en soi et non détaillée ici.

On notera que les étapes E20 à E50 peuvent être reprises avec le nouvel identifiant CId' afin d'identifier dans la base de données 17A une autre l'interface à activer le cas échéant. Ces étapes seront mises en oeuvre préférentiellement avant la désactivation de l'interface 13 afin de garantir une continuité dans la connexion offerte au terminal 10.

En revanche, si avant l'expiration de la durée de temporisation Tₜₑₘₚₒ, le terminal 10 reçoit un message de signalisation du réseau cellulaire NW lui indiquant que la cellule dans laquelle il se trouve est de nouveau la cellule identifiée par CId, l'interface de communications 13 est maintenue activée, et le temporisateur est désarmé.

Dans un autre mode de réalisation de l'invention, au lieu de vérifier si le terminal 10 est de nouveau dans la cellule identifiée par CId, le processeur 14 analyse, pendant la durée de temporisation, si une connexion au réseau NWP est active. Il désactive alors automatiquement l'interface 13 si la connexion au réseau NWP est inactive pendant toute la durée de temporisation.

Dans un autre mode de réalisation de l'invention, les étapes E60 à E90 ne sont pas mises en oeuvre et l'utilisateur désactive manuellement l'interface 13 lorsqu'il le désire.

Dans l'exemple envisagé ici, l'information représentative d'une localisation géographique du terminal 10 utilisée par le procédé selon l'invention est un identifiant de la cellule du réseau NW dans laquelle ou à proximité de laquelle se trouve le terminal, ou à laquelle il est attaché. Cette hypothèse n'est pas limitative, l'invention peut également s'appliquer à d'autres informations représentatives d'une localisation géographique du terminal 10, telles que par exemple, des coordonnées géographiques représentant la position du terminal 10.

Ces coordonnées géographiques pourront notamment être obtenues à partir d'un message envoyé par le réseau cellulaire auquel est connecté le terminal 10, ou d'un message reçu d'un système GPS, si le terminal est muni d'un récepteur GPS. Ainsi l'invention s'applique également lorsque le terminal 10 n'est pas connecté à un réseau cellulaire.

## Revendications

1. Procédé de gestion d'au moins une interface de communications sans fil (12,13) d'un terminal (10), comprenant :
- une étape d'obtention (E10) d'une information (CId) représentative d'une localisation géographique du terminal ;
- une étape de recherche (E20), dans une base de données (17A) du terminal, d'au moins un identifiant (ID(13)) d'une interface de communications sans fil (13) du terminal associé à cette information ; et
- le cas échéant, une étape d'activation automatique (E50) de l'interface de communications sans fil correspondant audit au moins un identifiant (13).

2. Procédé de gestion selon la revendication 1 dans lequel l'étape d'obtention (E10) comprend la réception d'un message émis par un système GPS et contenant ladite information représentative de la localisation géographique du terminal.

3. Procédé de gestion selon la revendication 2 dans lequel ladite information représentative de la localisation géographique du terminal est constituée par des coordonnées géographiques du terminal.

4. Procédé de gestion selon la revendication 1 dans lequel l'étape d'obtention (E10) comprend la réception d'un message de signalisation (M) émis par un réseau de télécommunications cellulaire (NW) auquel est connecté le terminal, ce message contenant ladite information représentative de la localisation géographique du terminal.

5. Procédé de gestion selon la revendication 4 dans lequel ladite information représentative de la localisation géographique du terminal est un identifiant d'une cellule (CId) du réseau de télécommunications cellulaire.

6. Procédé de gestion selon la revendication 1 comprenant en outre :
- une étape de détection (E60) d'un changement de localisation géographique du terminal ; et
- une étape de désactivation automatique (E90) de ladite au moins une interface.

7. Programme d'ordinateur comportant des instructions pour l'exécution des étapes du procédé de gestion selon l'une quelconque des revendications 1 à 6 lorsque ledit programme est exécuté par un ordinateur.

8. Support d'enregistrement lisible par un ordinateur sur lequel est enregistré un programme d'ordinateur comprenant des instructions pour l'exécution des étapes du procédé de gestion selon l'une quelconque des revendications 1 à 6.

9. Terminal (10) équipé d'au moins une interface de communications sans fil (12,13), comprenant :
- des moyens d'obtention (11,14) d'une information (CId) représentative d'une localisation géographique du terminal ;
- des moyens de recherche, dans une base de données du terminal (17A), d'au moins un identifiant d'une interface de communications sans fil du terminal associé à cette information ; et
- des moyens d'activation automatique (14), le cas échéant, de l'interface de communications sans fil correspondant audit au moins un identifiant.

## Patentansprüche

1. Verfahren zur Verwaltung mindestens einer drahtlosen Kommunikationsschnittstelle (12, 13) eines Endgeräts (10), wobei das Verfahren Folgendes umfasst:
- einen Schritt des Beziehens (E10) einer Information (CId), die für eine geographische Lokalisierung des Endgeräts repräsentativ ist;
- einen Schritt des Suchens (E20) mindestens einer Kennung (ID(13)) einer drahtlosen Kommunikationsschnittstelle (13) des Endgeräts, das mit dieser Information zusammenhängt, in einer Datenbank (17A) des Endgeräts und
- gegebenenfalls einen Schritt des automatischen Aktivierens (E50) der drahtlosen Kommunikationsschnittstelle entsprechend der mindestens einen Kennung (13).

2. Verwaltungsverfahren nach Anspruch 1, wobei der Bezugsschritt (E10) den Empfang einer Nachricht umfasst, die von einem GPS-System gesendet wird und die Information enthält, die für die geographische Lokalisierung des Endgeräts repräsentativ ist.

3. Verwaltungsverfahren nach Anspruch 2, wobei die Information, die für die geographische Lokalisierung des Endgeräts repräsentativ ist, aus geographischen Koordinaten des Endgeräts besteht.

4. Verwaltungsverfahren nach Anspruch 1, wobei der Bezugsschritt (E10) den Empfang einer Signalisierungsnachricht (M) umfasst, die von einem Mobiltelekommunikationsnetz (NW) gesendet wird, mit dem das Endgerät verbunden ist, wobei diese Nachricht die Information enthält, die für die geographische Lokalisierung des Endgeräts repräsentativ ist.

5. Verwaltungsverfähren nach Anspruch 4, wobei die Information, die für die geographische Lokalisierung des Endgeräts repräsentativ ist, eine Kennung einer Zelle (CId) des Mobiltelekommunikationsnetzes ist.

6. Verwaltungsverfahren nach Anspruch 1, das außerdem Folgendes umfasst:
- einen Schritt des Erfassens (E60) einer Veränderung der geographischen Lokalisierung des Endgeräts und
- einen Schritt des automatischen Deaktivierens (E90) der mindestens einen Schnittstelle.

7. Computerprogramm, das Befehle zur Ausführung von Schritten des Verwaltungsverfahrens nach einem der Ansprüche 1 bis 6 umfasst, wobei das Programm von einem Computer ausgeführt wird.

8. Aufzeichnungsmedium, das von einem Computer gelesen werden kann, wobei auf dem Aufzeichnungsmedium ein Computerprogramm aufgezeichnet ist, das Befehle zur Ausführung der Schritte des Verwaltungsverfahrens nach einem der Ansprüche 1 bis 6 umfasst.

9. Endgerät (10), das mit mindestens einer drahtlosen Kommunikationsschnittstelle (12, 13) ausgestattet ist, wobei das Endgerät Folgendes umfasst:
- Mittel zum Beziehen (11, 14) einer Information (CId), die für eine geographische Lokalisierung des Endgeräts repräsentativ ist;
- Mittel zum Suchen mindestens einer Kennung einer drahtlosen Kommunikationsschnittstelle des Endgeräts, das mit dieser Information zusammenhängt, in einer Datenbank des Endgeräts (17A) und
- Mittel zum automatischen Aktivieren (14) - gegebenenfalls - der drahtlosen Kommunikationsschnittstelle entsprechend der mindestens einen Kennung.

## Claims

1. Method for managing at least one wireless communication interface (12, 13) of a terminal (10), comprising:
- a step (E10) of obtaining an item of information (CId) representative of a geographic location of the terminal;
- a step of searching (E20), in a database (17A) of the terminal, for at least one identifier (ID(13)) of a wireless communication interface (13) of the terminal associated with this item of information; and
- when appropriate, a step of automatic activation (E50) of the wireless communication interface corresponding to said at least one identifier (13).

2. Management method according to Claim 1, in which the obtaining step (E10) comprises the receipt of a message sent by a GPS system and containing said item of information representative of the geographic location of the terminal.

3. Management according to Claim 2, in which said item of information representative of the geographic location of the terminal consists of geographic coordinates of the terminal.

4. Management method according to Claim 1, in which the obtaining step (E10) comprises the receipt of a signalling message (M) sent by a cellular telecommunication network (NW) to which the terminal is connected, this message containing the said item of information representative of the geographic location of the terminal.

5. Management method according to Claim 4, in which said item of information representative of the geographic location of the terminal is an identifier of a cell (CId) of the cellular telecommunication network.

6. Management method according to Claim 1, also comprising:
- a step (E60) of detecting a change of geographic location of the terminal; and
- a step (E90) of automatic deactivation of said at least one interface.

7. Computer program comprising instructions for the execution of the steps of the management method according to any one of Claims 1 to 6, when said program is executed by a computer.

8. Computer-readable recording medium on which a computer program is recorded comprising instructions for the execution of the steps of the management method according to any one of Claims 1 to 6.

9. Terminal (10) equipped with at least one wireless communication interface (12, 13) comprising:
- means (11, 14) for obtaining an item of information (CId) representative of a geographic location of the terminal;
- means for searching, in a database (17a) of the terminal, for at least one identifier of a wireless communication interface of the terminal associated with this item of information; and
- means (14) for the automatic activation, as appropriate, of the wireless communication interface corresponding to said at least one identifier.
